# EUROPÄISCHE PATENTSCHRIFT

(11) **EP 3 717 187 B1**
(45) Veröffentlichungstag und Bekanntmachung des Hinweises auf die Patenterteilung: **24.04.2024**
(21) Anmeldenummer: 18811200.7
(22) Anmeldetag: 26.11.2018
(51) Int. Cl.: B26D 7/02, B26F 1/04, B25B 11/00, B23K 26/21, B23K 26/38, B23K 37/04, B29C 65/00, B29C 65/08, B29C 65/74, B29C 65/78, B23Q 1/03, B29L 31/30

(54) **STANZBEARBEITUNGSSTATION UND VERFAHREN ZUR FIXIERUNG EINES MIT EINER LACKIERUNG VERSEHENEN POLYMEREN KFZ-STOSSFÄNGERS WÄHREND EINES STANZVORGANGES**
PUNCHING CENTER AND METHOD FOR FIXING A PAINTED POLYMERIC AUTOMOTIVE BUMPER DURING A PUNCHING PROCESS
STATION D'ESTEMPAGE AND MÉTHODE POUR FIXER UN PARE-CHOCS POLYMÈRE PEINT DURANT ESTEMPAGE

(30) Priorität: 29.11.2017 DE 102017128207
(43) Veröffentlichungstag der Anmeldung: 07.10.2020
(73) Patentinhaber: REHAU Automotive SE & Co. KG, 95111 Rehau (DE)
(72) Erfinder: SCHWARZ, Ralph, 91710 Gunzenhausen (DE)
(86) Internationale Anmeldenummer: PCT/EP2018/082503
(87) Internationale Veröffentlichungsnummer: WO 2019/105876

(56) Entgegenhaltungen:
- EP-A1- 2 394 780
- EP-A2- 1 905 690
- WO-A1-2014/169999
- WO-A1-2016/082903
- US-A- 5 722 646

## Beschreibung

Die Erfindung bezieht sich auf eine Stanzbearbeitungsstation mit mindestens zwei Aufnahmevorrichtungen für die Fixierung von mit einer Lackierung versehenen polymeren Kfz-Stoßfängern während eines Stanzvorganges, und auf ein Verfahren zur Fixierung eines mit einer Lackierung versehenen polymeren Kfz-Stoßfängers während eines Stanzvorganges.

Solche Aufnahmevorrichtungen werden beispielsweise dazu benötigt, um das Kfz-Bauteil zwecks Einbringung von Ausnehmungen für Parksensoren, Abstandshalter oder dergleichen in einer Stanzmaschine zu fixieren. Eine Aufnahmevorrichtung zur Fixierung von Kfz-Stoßfängern ist z.B. aus der DE 10 2009 019 644 A1 bekannt.

Die im Stand der Technik bekannten Aufnahmevorrichtungen sind hinsichtlich ihrer Aufnahmegeometrie zumeist an ein einzelnes Stoßfänger-Serienmodell einer konkreten Kraftfahrzeugserie angepasst. Daher ist es in solchen Fällen nicht möglich, verschieden gestaltete Kfz-Stoßfänger-Modelle in ein und derselben Aufnahmevorrichtung zu fixieren. Dies ist insbesondere bei der Herstellung von Stoßfängern für den Ersatzteildienst nachteilig, da trotz lediglich geringer Stückzahl für jedes Stoßfänger-Modell eine separate Stanzmaschine mit speziell an dieses Stoßfänger-Modell angepasster Aufnahmevorrichtung vorgehalten werden muss. Die nachteilige Folge ist einerseits eine hohe Kapitalbindung und andererseits ein sehr großer Platzbedarf.

Im Wege der immer stärkeren Flexibilisierung von Fertigungsbetrieben besteht ferner zunehmend auch in der Serienproduktion von Kfz-Bauteilen die Anforderung an eine höhere Flexibilität der Aufnahmevorrichtung, so dass diese insbesondere unterschiedliche Stoßfänger-Modelle fixieren kann.

In der WO 2016/082903 A1 ist eine gattungsgemäße Aufnahmevorrichtung vorgeschlagen worden, bei der die Fixiervorrichtung mehrere Fixierarm-Gruppen mit mehreren unabhängig voneinander beweglichen Fixierarmen für unterschiedliche Stoßfänger-Modelle aufweist.

Die Fixierarme besitzen unterschiedliche, in Fixierstellung an dem entsprechenden Stoßfänger-Modell anliegende Anlagekonturen, wobei die Anlagekontur der Fixierarme jeweils an die lokale Gestalt eines speziellen Stoßfänger-Modells angepasst ist. Bei der Fixierung eines speziellen Stoßfänger-Modells kommt entsprechend nur derjenige Fixierarm der Fixierarmgruppe zum Einsatz, dessen Anlagekontur mit der lokalen Gestalt dieses konkreten, speziellen Stoßfänger-Modells übereinstimmt. Hierdurch ist eine erhöhte Flexibilisierung im o.g. Sinne möglich. Diese ist jedoch vor dem Hintergrund der heutigen Anforderungen teilweise immer noch nicht zufriedenstellend. WO 2016/082903 A1 offenbart eine Stanzbearbeitungsstation nach dem Oberbegriff des Anspruchs 1 und offenbart auch ein Verfahren zur Fixierung eines polymeren Kfz-Stoßfängers, während eines Stanzvorganges, mit einer Aufnahmevorrichtung, die eine Fixiervorrichtung zur Fixierung des Kfz-Stoßfängers aufweist, wobei die Fixiereinrichtung mehrere voneinander beabstandete Fixierelemente aufweist.

Vor diesem Hintergrund liegt der Erfindung die Aufgabe zugrunde, eine Stanzbearbeitungsstation anzugeben, welche gegenüber dem Stand der Technik eine noch größere Flexibilität besitzt.

Erfindungsgemäß wird diese Aufgabe durch eine Stanzbearbeitungsstation nach Anspruch 1 gelöst. Die erfindungsgemäße Lehre löst sich also von dem bislang im Stand der Technik vorliegenden Grundprinzip, dass die jeweilige lokale Fixierung zwar flexibel ausgewählt werden kann, jedoch insgesamt relativ zum Grundgestell ortsfest ist. Erfindungsgemäß können die die Fixierpunkte der Fixiereinrichtung definierenden Fixierelemente durch die mindestens mehrere Linearantriebe aufweisende Linearantriebseinheit auf dem Grundgestell translatorisch verfahren werden, so dass sie eine optimal an die Kontur des Kfz-Stoßfängers angepasste Position zur lokalen Fixierung einnehmen können. der Erfindung weist mindestens eine Linearantriebseinheit mindestens zwei Linearantriebe auf, so dass das entsprechende Fixierelement in mindestens zwei Achsrichtungen relativ zum

Grundgestell bewegbar ist. Im Rahmen der Erfindung liegt es insbesondere, dass für eine Einstellbewegung eines Fixierelementes in alle drei Achsrichtungen jeweils pro Achse ein einzelner Linearantrieb vorgesehen ist und somit mindestens eine, vorzugsweise alle Linearantriebseinheit/en jeweils mindestens drei Linearantriebe aufweist/en. Hierdurch ist eine höchstmögliche Flexibilität gewährleistet.

Die Fixierelemente können auf einer, vorzugsweise plattenförmigen, Trägervorrichtung angeordnet sein, welche auf dem Grundgestell montiert ist. Hierbei können die Linearantriebseinheiten auf der Trägervorrichtung befestigt sein. Zweckmäßigerweise sind die Linearantriebe als Linearmotoren, insbesondere als Magnet-Linearantriebe, und / oder Linearaktuatoren und / oder als Hydraulikzylinder und / oder als Pneumatikzylinder ausgebildet. Insbesondere Magnet-Linearantriebe zeichnen sich durch ihre Wartungsfreiheit aus. Im Rahmen der Erfindung liegt es auch, dass die Linearantriebe als Spindelantriebe ausgebildet sind. Vorzugsweise weist die Fixiervorrichtung mindestens vier, vorzugsweise mindestens sechs Fixierelemente auf. Hierdurch ist insbesondere bei der Fixierung von großen Kfz-Stoßfängern eine über die gesamte Oberfläche des Stoßfängers gleichmäßig verteilte Fixierung möglich.

Im Rahmen der Erfindung liegt es, dass ein Fixierelement jeweils mindestens ein Unterdruck-Arretier-Element zur lokalen Arretierung des Kfz-Stoßfängers am Fixierelement mittels Unterdruck aufweist. Konkret kann also im Rahmen der Erfindung zunächst das Fixierelement in die gewünschte Fixierposition mittels der Linearantriebseinheit verfahren werden, um eine optimale lokale Fixierung des Kfz-Stoßfängers mittels des jeweiligen Fixierelementes zu ermöglichen. Nach Beendigung dieser Einstellbewegung über die Linearantriebseinheit wird entsprechend das Bauteil mit seiner lokalen Oberfläche, vorzugsweise unterseitig, an das Unterdruck-Arretier-Element angelegt. Durch Erzeugung eines Unterdruckes im Unterdruck-Arretier-Element wird sodann das Bauteil am jeweiligen Fixierelement festgesaugt und somit lokal fixiert. Dies hat den großen Vorteil, dass eine sehr schonende Fixierung möglich ist, welche zu keinerlei Beschädigung des Bauteils in Form von Abzeichnungen oder dergl. führt. Die Summe aller so durchgeführten lokalen Fixierungen ergibt dann eine insgesamt genau auf den konkreten Kfz-Stoßfänger zugeschnittene Fixierung dieses Bauteils für den nachfolgenden Bearbeitungsvorgang, z.B. eine Stanzung von Durchbrüchen.

Erfindungsgemäß ist das Grundgestell bodenseitig verfahrbar ausgebildet. Hierdurch ist es beispielsweise möglich, ein Grundgestell mit einem daran fixierten ersten Kfz-Stoßfänger der Stanzvorrichtung zuzuführen und zu bearbeiten und sodann mittels des bewegbaren Grundgestells zu einer weiteren Station (z.B. Lackierung, Endkontrolle, Konfektion, Verpakcung etc.) zu transportieren. Sodann kann ein weiteres Grundgestell mit einem zweiten Kfz-Stoßfänger zur Stanzvorrichtung verfahren werden, so dass dann dieses zweite Bauteil von der Stanzvorrichtung bearbeitet werden kann. Dieser weite Kfz-Stoßfänger kann eine andere Gestalt als der erste Kfz-Stoßfänger haben, da die Aufnahmevorrichtung durch ihre individuell in ihrer Position einstellbaren Fixierelemente unterschiedlichst gestaltete Bauteilgeometrien fixieren kann. Erfindungsgemäß ist das Grundgestell zur Gewährleistung der Verfahrbarkeit bodenseitig mit einer Rolleinrichtung und / oder eine Gleiteinrichtung versehen. Insbesondere ist es möglich, dass die Roll- und / oder Gleiteinrichtung über ein digitales Datenverarbeitungssystem angesteuert wird. Die Roll- und/oder Gleiteinrichtung kann im Rahmen der Erfindung von einem bodenseitigen Führungssystem geführt werden, z.B. in Form von Schienen, kontaktlosen Führungseinrichtungen (z.B. auf Magnetismus beruhend) oder dergl.

Die erfindungsgemäße Stanzbearbeitungsstation umfasst mindestens eine Stanzvorrichtung, vorzugsweise mehrere Stanzvorrichtungen zum Stanzen des Kfz-Stoßfängers wobei die Stanzvorrichtung mindestens ein Stanzwerkzeug sowie mindestens eine Stanzmatrize umfasst, wobei sowohl Stanzwerkzeug als auch Stanzmatrize jeweils an einer Aufnahmevorrichtung eines beweglichen, vorzugsweise drehbeweglichen, Trägers befestigt sind, wobei die beiden Träger jeweils mindestens eine weitere Aufnahmeeinrichtung zur Befestigung mindestens einer weiteren Bearbeitungseinrichtung aufweisen, so dass durch eine Bewegung der beiden Träger eine Einstellung der Stanzmaschine auf einen neuen, anders gestalteten Bearbeitungsschritt mit den weiteren Bearbeitungseinrichtungen vornehmbar ist und dass beide Träger an einem C-förmigen Bügel angeordnet sind, an dem die gesamte Stanzvorrichtung montiert ist. Im Rahmen der Erfindung liegt es hierbei insbesondere, dass die Stanzvorrichtung neben dem Stanzwerkzeug und der Stanzmatrize an beiden Trägern jeweils mindestens zwei weitere Bearbeitungseinrichtungen aufweist, die durch die Bewegbarkeit der Träger individuell zum Einsatz gebracht werden können. Somit können mittels der Stanzvorrichtung mindestens zwei, vorzugsweise mindestens drei unterschiedliche Bearbeitungsschritte nacheinander am Kfz-Stoßfänger vorgenommen werden. Hierdurch ist es insbesondere möglich, mittels der Stanzmaschine nacheinander mehrere, unterschiedliche Bearbeitungsvorgänge am Kfz-Stoßfänger vorzunehmen, beispielsweise unterschiedliche Stanzvorgänge und/oder mindestens einen Schweißvorgang oder dergl. Insgesamt ist mittels der erfindungsgemäßen Stanzbearbeitungsstation eine äußerst individuelle, flexible und zugleich sehr schnelle sowie zuverlässige Bearbeitung unterschiedlichster Kfz-Stoßfänger möglich, wobei die Kfz-Stoßfänger jeweils auf einer einzelnen Aufnahmevorrichtung der vorbeschriebenen, erfindungsgemäßen Art angeordnet sind. Um unterschiedliche Kfz-Stoßfänger mit ein und derselben Stanzbearbeitungsstation bearbeiten zu können, liegt es insbesondere im Rahmen der Erfindung, dass sie mehrere, jeweils an C-Bügeln angeordnete Stanzvorrichtungen der vorbeschriebenen Art umfasst, wobei z.B. jeder C-Bügel für die Bearbeitung einer konkreten Kfz-Stoßfängergeometrie eingerichtet ist und durch die Auswahl des entsprechenden C-Bügels die ordnungsgemäße Bearbeitung des im Bearbeitungsbereich befindlichen, auf der Aufnahmevorrichtung fixierten Stoßfängers teilsgewährleistet werden kann.

Gegenstand der Erfindung ist ferner ein Verfahren zur Fixierung eines mit einer Lackierung versehenen polymeren Kfz-Stoßfängers während eines Stanzvorganges, mit den Merkmalen des Anspruchs 5.

Vorzugsweise werden die Linearantriebe hierbei von einem digitalen Datenverarbeitungssystem angesteuert. Dieses Datenverarbeitungssystem steuert und/oder regelt vorzugsweise auch die zuvor beschriebene Bewegung der Aufnahmevorrichtungen über die Rollen- bzw. Gleitvorrichtung beispielsweise innerhalb einer Fabrikanlage und/oder steuert und/oder regelt auch die Bewegungen der mindestens einen vorbeschriebenen Stanzvorrichtung.

Im Rahmen der Erfindung liegt es insbesondere, dass als Eingangsgrößen zur Ansteuerung der Linearantriebe die CAD-Daten des zu fixierenden Kfz-Stoßfängers verwendet werden. Die CAD-Daten enthalten sehr detailliert die exakte Kontur, insbesondere Oberflächenkontur des zu bearbeitenden Stoßfängers.

Hierdurch lässt sich über elektronische Datenverarbeitung problemlos die optimale Position der einzelnen Fixierelemente errechnen, um den Stoßfänger während der Bearbeitung bestmöglich zu fixieren. Entsprechend erhalten die Linearantriebseinheiten über das elektronische Datenverarbeitungssystem Steuerbefehle, um die einzelnen Fixierelemente in ihre jeweilige Fixierposition zu verfahren, so dass insgesamt der Stoßfänger wie beschrieben mittels eines individuell auf die konkrete Bauteilgeometrie abgestimmten Einstellvorgangs aller Fixierarme optimal fixiert wird.

Im Folgenden wird die Erfindung anhand einer lediglich ein Ausführungsbeispiel darstellenden Zeichnung ausführlich erläutert. Es zeigen schematisch:
- Fig. 1:: eine Aufnahmevorrichtung für die Fixierung eines polymeren Kfz-Stoßfängers;
- Fig. 2:: eine erfindungsgemäße Stanzmaschine mit einer Aufnahmevorrichtung gemäß Fig. 1;
- Fig. 3:: die in Fig. 2 dargestellte Stanzvorrichtung in einer detaillierten Darstellung und
- Fig. 4:: eine Teilansicht der in Fig. 3 dargestellten Vorrichtung.

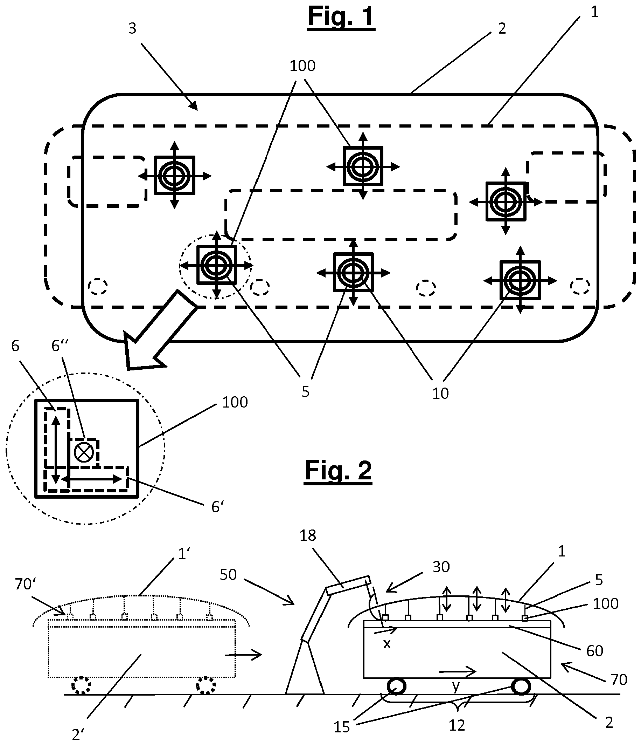

Die Fig. 1 zeigt eine Aufnahmevorrichtung 70 für die Fixierung eines polymeren Kfz-Stoßfängers 1 während eines Stanzvorganges. Die in der Fig. 1 zu sehende, nach oben zeigende Außenseite des Kfz-Stoßfängers 1 ist mit einer Lackierung versehen. Mit Hilfe einer in Fig. 2 dargestellten Stanzvorrichtung 30 werden verschiedene Stanzungen an diesem Kfz-Stoßfänger 1 vorgenommen, beispielsweise im Rahmen einer Montage von (nicht dergestellten) Parksensoren oder dergleichen am Stoßfänger 1. Die Aufnahmevorrichtung 70 weist ein Grundgestell 2 auf und eine Fixiervorrichtung 3 zur Fixierung des Kfz-Stoßfängers 1 auf dem Grundgestell 2 auf. Anhand der Fig. 1 ist erkennbar, dass die Fixiervorrichtung 3 mehrere voneinander beabstandete Fixierelemente 5 aufweist. Die Fixierelemente 5 sind an jeweils einer Linearantriebseinheit 100 angeordnet, wobei jede Linearantriebseinheit 100 jeweils drei Linearantriebe 6, 6', 6" aufweist (s. vergrößerter Ausschnitt der Fig. 1, der nur die Linearantriebseinheit 100 zeigt). Jeder der Linearantriebe 6, 6', 6" ermöglicht eine unabhängige, individuelle lineare Verschiebung des entsprechenden Fixierelementes 5 in eine Achsrichtung relativ zum Grundgestell 2. Da für jede Achsrichtung ein Linearantrieb 6, 6', 6" vorgesehen ist, kann jedes Fixierelement 5 vollkommen unabhängig von Stellbewegungen der anderen Fixierelemente 5 beliebig in alle drei Achsrichtungen verfahren und somit seine Fixierposition in Abhängigkeit der lokalen Gestalt des Kfz-Stoßfängers 1 optimal eingestellt werden. Durch die Gesamtheit der Linearbewegungen der Fixierelemente 5 sind die Fixierpunkte der Fixiervorrichtung 3 somit individuell an die Oberflächenkontur des konkret zu fixierenden Kfz-Stoßfängers 1 anpassbar. Hierdurch können insbesondere auch sehr unterschiedlich gestaltete Kfz-Stoßfänger-Modelle 1 auf ein und derselben Aufnahmevorrichtung 70 fixiert werden.

Im Ausführungsbeispiel ist jedes Fixierelement 5 durch zwei Linearantriebe 6, 6' in beide horizontale Achsrichtungen relativ zum Grundgestell 2 verschiebbar (s. Pfeile in Fig. 1). Darüber hinaus erlaubt der jeweils dritte Linearantrieb 6" eine Vertikalverstellung der Fixierelemente 5 (s. Doppelpfeile in Fig. 2). Die Linearantriebe 6, 6', 6" können als Linearmotoren mit elektrodynamischem Wirkprinzip oder als Linearaktuatoren mit elektrostatischem, elektromagnetischem, piezoelektrischem, magnetostriktivem oder thermoelektrischem Wirkprinzip ausgebildet. Insbesondere können die Linearantriebe 6, 6', 6" als Magnet-Linearmotoren ausgebildet sein. Die wartungsfreien Magnet-Linearmotoren sind zweckmäßigerweise mit innenseitigen, vorzugsweise mittigen, Spulen und außenseitigen Permanentmagneten ausgestattet (nicht dargestellt), wobei die Linearbewegung zwischen den Spulen und den Permanentmagneten stattfindet. Es ist erkennbar, dass im Ausführungsbeispiel die Fixiervorrichtung 3 insgesamt sechs Fixierelemente 5 aufweist. Ein Fixierelement 5 weist hierbei jeweils ein Unterdruck-Arretier-Element 10 zur lokalen Arretierung des Kfz-Stoßfängers 1 am Fixierelement 5 auf. Durch die Erzeugung eines Unterdrucks am Unterdruck-Arretier-Element 10 wird der Stoßfänger 1 lokal an der entsprechenden Fixiervorrichtung 3 festgesaugt und damit fixiert.

Anhand einer vergleichenden Betrachtung der Fig. 1 und 2 ist erkennbar, dass das Grundgestell 2 bzw. 2' bodenseitig verfahrbar ausgebildet ist. Zur Gewährleistung der Verfahrbarkeit weisen die Grundgestelle 2, 2' bodenseitig eine Rolleinrichtung 12 mit mehreren Rollen 15 auf. Hierdurch ist es möglich, (wie in Fig. 2 dargestellt) die Grundgestelle 2, 2' der Aufnahmevorrichtungen 70, 70' in y-Richtung horizontal zu verschieben. Insbesondere kann dadurch eine einzelne Aufnahmevorrichtung 70, 70' mit einem zu bearbeitenden Kfz-Stoßfänger 1, 1' an eine die Stanzvorrichtung 30 aufweisende Stanzmaschine 50 herangefahren werden, wobei mittels der Stanzvorrichtung 30 sodann eine Bearbeitung des Kfz-Stoßfängers 1, 1' durch einen oder mehrere Stanzvorgänge sowie optional mehrere andere Bearbeitungsvorgänge, die individuell auf den jeweiligen Kfz-Stoßfänger 1, 1' angepasst sind, vorgenommen werden kann. Während der Bearbeitung des Stoßfängers 1, 1' durch die an einem Robotaram 30 der Stanzmaschine 50 montierten Stanzvorrichtung 30 werden sowohl Roboterarm als auch die Stanzvorrichtung 30 über ein elektronisches Datenverarbeitungssystem koordiniert angesteuert, so dass eine individuelle Bearbeitung des konkret in der Bearbeitungszone befindlichen Kfz-Stoßfängers 1, 1` möglich. Nach Beendigung der Bearbeitung des ersten Kfz-Stoßfängers 1 wird die Aufnahmevorrichtung 70 mit dem Grundgestell 2 zur nächsten Station (z.B. Endkontrolle, Verpackung, Konfektionierung o. dergl.) gefahren und sodann wird eine weitere Aufnahmevorrichtung 70' mit bewegbarem Grundgestell 2' und daran montiertem zweiten Kfz-Stoßfänger 1' an die Stanzmaschine 50 mit der Stanzvorrichtung 30 herangefahren. Der zweite Kfz-Stoßfänger 1' weist eine Geometrie auf, welche sich von der Geometrie des ersten Kfz-Stoßfängers 1 unterscheidet, während die Aufnahmevorrichtung 70 baugleich zur Aufnahmevorrichtung 70' ist. Anhand der Fig. 2 ist ferner erkennbar, dass die Linearantriebseinheiten 100 auf einem plattenförmigen Träger 60 angeordnet sind, welcher auf dem Grundgestell 2 montiert ist.

Bei einem Verfahren zur Fixierung des polymeren Kfz-Stoßfängers 1 während eines Bearbeitungsvorganges, also beispielsweise eines Stanzvorganges gemäß Fig. 2, wird der Kfz-Stoßfänger 1 zunächst mittels der die Fixiervorrichtung 3 aufweisenden und in Fig. 1 dargestellten Aufnahmevorrichtung 70 fixiert. Hierzu werden zunächst die Fixierelemente 5 durch die Linearantriebe 6, 6', 6" jeweils relativ zum Grundgestell 2 verschoben, um durch die Gesamtheit der Bewegungen der Fixierelemente 5 relativ zum Grundgestell 2 die Fixiervorrichtung 3 insgesamt individuell an die Oberflächenkontur des konkret zu fixierenden Kfz-Stoßfängers 1 anzupassen. Die Linearantriebe 6, 6', 6" werden von einem digitalen Datenverarbeitungssystem angesteuert. Als Eingangsgrößen zur Ansteuerung der Linearantriebe 6, 6', 6" werden die CAD-Daten des konkret zu fixierenden Kfz-Bauteils 1 verwendet.

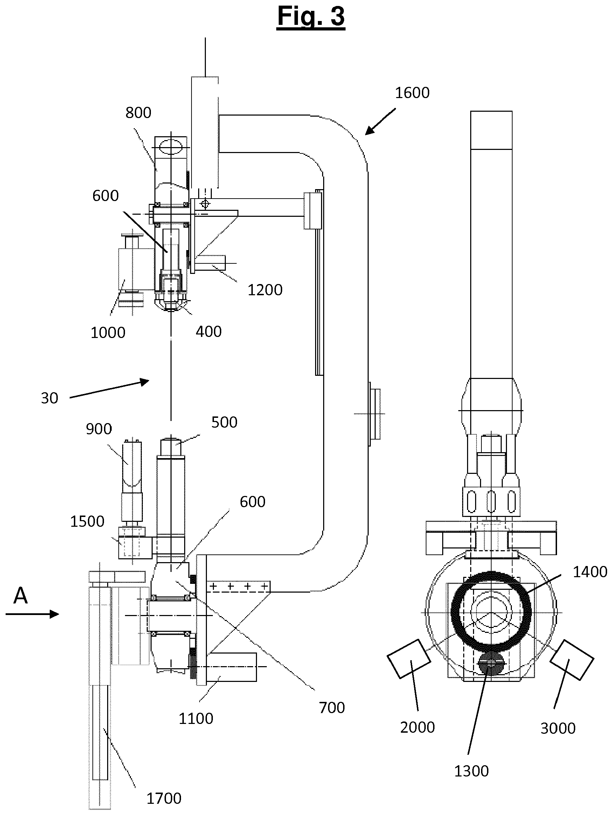

Die in Fig. 2 schematisch dargestellte Stanzvorrichtung 30 ist in Fig. 3 im Detail dargestellt. Die Fig. 3 zeigt, dass die Stanzvorrichtung 30 ein Stanzwerkzeug 400 sowie eine Stanzmatrize 500 umfasst. Das Stanzwerkzeug 400 und die Stanzmatrize 500 sind jeweils in einer Aufnahmeeinrichtung 600 eines drehbeweglichen Trägers 700, 800 befestigt, wobei die drehbeweglichen Träger 700, 800 jeweils mehrere weitere Aufnahmeeinrichtungen 600 zur Befestigung weiterer Bearbeitungseinrichtungen 900, 1000 aufweisen. Die rechte Darstellung der Fig. 3 zeigt ausschnittsweise nur den unteren Träger 700 in der Frontsicht A (s. Pfeil in der linken Darstellung der Fig. 3). Neben den Bearbeitungseinrichtungen 400, 500, 900, 1000 sind im Winkel von α = 120° (s. Fig. 3 rechte Darstellung) auf den Trägerachsen versetzt ebenfalls Bearbeitungseinrichtungen 2000, 3000 vorgesehen. Insbesondere einer vergleichenden Betrachtung der linken und rechten Darstellung in Fig. 3 ist zu entnehmen, dass die Achsen der Träger 700, 800 jeweils senkrecht zur Bearbeitungsrichtung der Stanzvorrichtung 30 ausgebildet sind. Folglich können durch eine einfache Rotationsbewegung der Träger 700, 800 unterschiedliche Bearbeitungseinrichtungen 400, 500, 900, 1000, 2000, 3000 in Arbeitsposition gebracht werden. Diese Rotationsbewegung wird jeweils von einem Servomotor 1100, 1200 ausgeführt, welcher ein Antriebsrad 1300 aufweist, welches mit einem Antriebsrad 1400 der Träger 700, 800 zusammenwirkt. Die Träger 700, 800 besitzen jeweils eine sternförmige Geometrie.

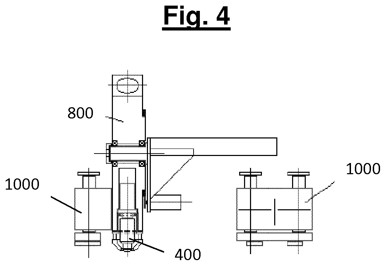

Die Fig. 3 und 4 zeigen neben den Bearbeitungseinrichtungen Stanzwerkzeug 400 und Stanzmatrize 500 weitere Bearbeitungseinrichtungen, nämlich Schweißsonotroden 900 zur Durchführung von Schweißvorgängen, die in einer entsprechenden Wechselaufnahme 1500 montiert sind, sowie einen Niederhalter 1000 mit Niederhalterkissen, der für Schweißund Klebvorgänge zur Fixierung des Stoßfängers 1 benötigt wird. Den Figuren 2 und 3 ist zu entnehmen, dass die Träger 700, 800 an einem C-förmigen Bügel 1600 angeordnet sind, an dem die gesamte Stanzvorrichtung 30 montiert ist. In Fig. 3 ist ferner eine Vorschubeinheit 1700 für die Schweißsonotroden 900 dargestellt. Die Fig. 4 zeigt den oberen Träger 800 in einer Einzeldarstellung, wobei rechts der Niederhalter noch einmal separat in einer Seitenansicht gezeigt ist.

Bei der Fertigung in der Arbeitsstellung gemäß Fig. 3 wird zunächst ein Stanzvorgang mit dem Stanzwerkzeug 400 und der Stanzmatrize 500 durchgeführt. Danach wird der C-Bügel 1600 ein Stück weit verfahren, so dass nunmehr die Schweißsonotroden 900 und der Niederhalter 1000 für einen nachfolgenden Schweißvorgang an derselben Stelle des Stoßfängers 1 entsprechend positioniert sind. Mittels der Vorschubeinheit 1700 werden sodann die Schweißsonotroden 900 aus der Wechselaufnahme 1500 herausgehoben und für den Schweißvorgang gegen den entsprechenden Abschnitt des Stoßfängers 1 zugestellt. Folglich können bei der in Fig. 3 dargestellten Winkelstellung der Träger 700, 800 neben dem Stanzwerkzeug 300 und der Stanzmatrize 400 zusätzlich weitere Bearbeitungsvorrichtungen 900, 1000 in eine Bearbeitungsposition gebracht werden. Nach diesem kombinierten Stanz- und Schweißvorgang wird der C-Bügel 1600 zur nächsten Bearbeitungsstelle des Stoßfängers 1 verfahren, wobei durch eine einfache Drehung der Träger 700, 800 andere Bearbeitungswerkzeuge 2000, 3000 in eine Bearbeitungsposition gebracht werden können. Alternativ kann auch das Grundgestell 2 relativ zum C-Bügel 1600 verfahren werden.

Wie bereits erläutert, ist der C-förmige Bügel 1600 am Roboterarm 18 montiert. Durch eine Verfahrbewegung des Roboterarms 18 wird der C-Bügel 1600 entlang des Kfz-Stoßfängers 1, 1' bewegt und die Träger 700, 800 nach jedem Bearbeitungsschritt so gedreht, dass die für den nachfolgenden Bearbeitungsschritt jeweils passenden Bearbeitungseinrichtungen in Bearbeitungsposition gebracht werden. Die Bewegung des C-Bügels 1600 ist durch die Pfeilrichtung x in Fig. 2 angedeutet. Auf diese Weise werden nacheinander an entsprechend unterschiedlichen Positionen des Stoßfängers 1 Bearbeitungsschritte vorgenommen. Hierbei kann es sich beispielsweise um mehrere aufeinanderfolgende Stanzvorgänge handeln, aber auch insbesondere um Kombinationen von Stanzvorgängen mit Schweiß- und / oder Klebvorgängen. Mittels der erfindungsgemäßen Lehre ist es folglich insbesondere auch möglich, an einer bestimmten Bearbeitungsposition des Stoßfängers 1 zunächst den Stanzvorgang vorzunehmen und danach an derselben Stelle einen Schweiß- bzw. Klebvorgang. Hierdurch kann beispielsweise zunächst ein Durchbruch für einen Parksensor gefertigt und anschließend direkt der entsprechende Sensorhalter am Stoßfänger 1 angeschweißt werden.

Im Rahmen der Erfindung liegt es insbesondere, dass der in den Figuren dargestellte C-Bügel 1600, der für die Bearbeitung des ersten Kfz-Stoßfängers 1 eingerichtet ist, gegen einen anderen C-Bügel (nicht dargestellt) mit einer anders gestalteten Stanzvorrichtung ausgetauscht werden kann, wobei der andere C-Bügel an die Bearbeitung des zweiten, anders gestalteten Kfz-Stoßfängers 1' angepasst ist. Diese Umrüstung ist mit vergleichsweise geringem Aufwand verbunden, da lediglich der C-Bügel 1600 vom Roboterarm 18 demontiert und danach der andere C-Bügel am Roboterarm 18 montiert werden muss. Hierdurch ist z.B. eine einfache Umrüstung der Stanzmaschine 50 von einer Bearbeitung des auf dem Grundgestell 2 fixierten Kfz-Stoßfängermodells 1 mit der Stanzvorrichtung 30 auf eine Bearbeitung des auf dem Grundgestell 2' fixierten Kfz-Stoßfängermodells 2 mit der erwähnten anderen Stanzvorrichtung möglich.

## Patentansprüche

1. Stanzbearbeitungsstation mit mindestens zwei Aufnahmevorrichtungen (70, 70') für die Fixierung von mit einer Lackierung versehenen polymeren Kfz-Stoßfängern (1, 1') während eines Stanzvorganges, wobei jede Aufnahmevorrichtung (70, 70') jeweils
- ein Grundgestell (2, 2') und
- eine Fixiervorrichtung (3) mit mehreren voneinander beabstandeten Fixierelementen (5) zur Fixierung des Kfz-Stoßfängers (1, 1') auf dem Grundgestell (2) aufweist,
**dadurch gekennzeichnet,**
- **dass** die Fixierelemente (5) an jeweils einer Linearantriebseinheit (100) mit mindestens zwei Linearantrieben (6) angeordnet sind, die eine individuelle Verschiebung des jeweils einzelnen Fixierelementes (5) in mindestens zwei Achsrichtungen relativ zum Grundgestell (2, 2') ermöglichen, und
- **dass** durch die Gesamtheit der Bewegungen der Fixierelemente (5) die Fixiervorrichtung (3) individuell an die Oberflächenkontur des konkret zu fixierenden Kfz-Stoßfängers (1, 1') anpassbar ist,
- **dass** das Grundgestell (2, 2') bodenseitig verfahrbar ausgebildet ist und zur Gewährleistung der Verfahrbarkeit bodenseitig eine Rolleinrichtung (12) und/oder eine Gleiteinrichtung aufweist,
und
- **dass** die Stanzbearbeitungsstation weiterhin mindestens eine Stanzvorrichtung (30) zum Stanzen des Kfz-Stoßfängers (1) umfasst, wobei die Stanzvorrichtung (30) mindestens ein Stanzwerkzeug (400) sowie mindestens eine Stanzmatrize (500) umfasst, wobei sowohl Stanzwerkzeug (400) als auch Stanzmatrize (500) jeweils an einer Aufnahmeeinrichtung (600) eines beweglichen, vorzugsweise drehbeweglichen, Trägers (700, 800) befestigt sind, wobei die beiden Träger (700, 800) jeweils mindestens eine weitere Aufnahmeeinrichtung (600) zur Befestigung mindestens einer weiteren Bearbeitungseinrichtung (900, 1000, 2000, 3000) aufweisen, so dass durch eine Bewegung der beiden Träger (700, 800) eine Einstellung der Stanzmaschine (30) auf einen neuen, anders gestalteten Bearbeitungsschritt mit den weiteren Bearbeitungseinrichtungen (900, 1000, 2000, 3000) vornehmbar ist und dass beide Träger (700, 800) an einem C-förmigen Bügel (1600) angeordnet sind, an dem die gesamte Stanzvorrichtung (30) montiert ist.

2. Stanzbearbeitungsstation nach Anspruch 1, **dadurch gekennzeichnet, dass** die Linearantriebe (6) als Linearmotoren, insbesondere Magnet-Linearantriebe, und/oder Linearaktoren und/oder als Hydraulikzylinder und/oder als Pneumatikzylinder ausgebildet sind.

3. Stanzbearbeitungsstation nach Anspruch 1 oder 2, **dadurch gekennzeichnet, dass** die Fixiervorrichtung (3) mindestens vier, vorzugsweise mindestens sechs Fixierelemente (5) aufweist.

4. Stanzbearbeitungsstation nach einem der Ansprüche 1 bis 3, **dadurch gekennzeichnet, dass** ein Fixierelement (5) jeweils mindestens ein Unterdruck-Arretierelement (10) zur lokalen Arretierung des Kfz-Stoßfängers (1, 1') am Fixierelement (5) aufweist.

5. Verfahren zur Fixierung eines mit einer Lackierung versehenen polymeren Kfz-Stoßfängers (1, 1') während eines Stanzvorganges, mit einer Aufnahmevorrichtung (70, 70'), die eine Fixiervorrichtung (3) zur Fixierung des Kfz-Stoßfängers (1, 1') aufweist,
wobei die Fixiereinrichtung (3) mehrere voneinander beabstandete Fixierelemente (5) aufweist, und
wobei die Fixierelemente (5) durch jeweils mindestens zwei, eine Bewegung der Fixierelemente (5) in mindestens zwei Achsrichtungen ermöglichende Linearantriebe (6) jeweils relativ zu einem Grundgestell (2, 2') der Aufnahmevorrichtung (70, 70') verschoben werden, um durch die Gesamtheit der Bewegungen der Fixierelemente (5) relativ zum Grundgestell (2, 2') die Fixiervorrichtung (3) insgesamt individuell an die Oberflächenkontur des konkret zu fixierenden Kfz-Stoßfängers (1, 1') anzupassen.

6. Verfahren nach Anspruch 5, **dadurch gekennzeichnet, dass** die Linearantriebe (6) von einem digitalen Datenverarbeitungssystem angesteuert werden.

7. Verfahren nach Anspruch 6, **dadurch gekennzeichnet, dass** als Eingangsgrößen zur Ansteuerung der Linearantriebe (6) die CAD-Daten des zu fixierenden Kfz-Stoßfängers (1, 1') verwendet werden.

## Claims

1. Punching machining station with at least two holding devices (70, 70') for fixing polymeric motor vehicle bumpers (1, 1'), which are provided with a finish, during a punching process, wherein each holding device (70, 70') has respectively
- a base frame (2, 2') and
- a fixing device (3) with a number of fixing elements (5) spaced from one another for fixing the motor vehicle bumper (1, 1') on the base frame (2),
**characterised in that**
- the fixing elements (5) are arranged respectively on a linear drive unit (100) with at least two linear drives (6), which enable individual displacement of each individual fixing element (5) in at least two axial directions relative to the base frame (2, 2'), and
- that due to the totality of movements of the fixing elements (5), the fixing device (3) is individually adaptable to the surface contour of the motor vehicle bumper (1, 1') specifically to be fixed,
- that the base frame (2, 2') is designed to be movable on the floor side and has a roller device (12) and/or a sliding device on the floor side to guarantee mobility,
and
that the punching machining station further comprises at least one punching device (30) for punching the motor vehicle bumper (1),
wherein the punching device (30) comprises at least one punch (400) and at least one die (500) , wherein both punch (400) and die (500) are each attached to a holding device (600) of a mobile, preferably rotating, carrier (700, 800), wherein the two carriers (700, 800) each have at least one further holding device (600) for attaching at least one further machining device (900, 1000, 2000, 3000), so that by a movement of the two carriers (700, 800) an adjustment of the punching machine (30) to a new, differently configured machining step with the further machining devices (900, 1000, 2000, 3000) can be undertaken and that both carriers (700, 800) are arranged on a C-shaped bracket (1600), on which the entire punching device (30) is mounted.

2. Punching machining station according to claim 1, **characterised in that** the linear drives (6) are designed as linear motors, in particular magnetic linear drives, and/or linear actuators and/or as hydraulic cylinders and/or as pneumatic cylinders.

3. Punching machining station according to claim 1 or 2, **characterised in that** the fixing device (3) has at least four, preferably at least six fixing elements (5).

4. Punching machining station according to one of claims 1 to 3, **characterised in that** a fixing element (5) has at least one vacuum locking element (10) in each case for local locking of the motor vehicle bumper (1, 1') on the fixing element (5).

5. Method for fixing a polymeric motor vehicle bumper (1, 1'), which is provided with a finish, during a punching process, with a holding device (70, 70'), which has a fixing device (3) for fixing the motor vehicle bumper (1, 1'), wherein the fixing device (3) has a number of fixing elements (5) spaced from one another, and
wherein the fixing elements (5) are displaced by respectively at least two linear drives (6) facilitating a movement of the fixing elements (5) in at least two axial directions relative to a base frame (2, 2') of the holding device (70, 70') in each case, in order by the totality of movements of the fixing elements (5) relative to the base frame (2, 2') to adapt the fixing device (3) as a whole individually to the surface contour of the motor vehicle bumper (1, 1') specifically to be fixed.

6. Method according to claim 5, **characterised in that** the linear drives (6) are controlled by a digital data processing system.

7. Method according to claim 6, **characterised in that** the CAD data of the motor vehicle bumper (1, 1') to be fixed are used as input variables for controlling the linear drives (6).

## Revendications

1. Poste de poinçonnage comportant au moins deux dispositifs de réception (70, 70') pour la fixation de pare-chocs (1, 1') de véhicule automobile en polymère pourvus d'une peinture pendant un processus de poinçonnage, chaque dispositif de réception (70, 70') comportant respectivement
- un socle (2, 2') et
- un dispositif de fixation (3) pourvu de plusieurs éléments de fixation (5) espacés les uns des autres pour la fixation du pare-chocs (1, 1') sur le socle (2),
**caractérisé**
- **en ce que** les éléments de fixation (5) sont disposés sur respectivement une unité d'entraînement linéaire (100) pourvue d'au moins deux entraînements linéaires (6) qui permettent un déplacement individuel des différents éléments de fixation (5) respectifs dans au moins deux directions axiales par rapport au socle (2, 2'), et
- **en ce que**, par l'ensemble des mouvements des éléments de fixation (5), le dispositif de fixation (3) peut être adapté individuellement au contour de surface du pare-chocs (1, 1') de véhicule automobile concret à fixer,
- **en ce que** le socle (2, 2') est conçu déplaçable par le côté inférieur et, pour assurer la déplaçabilité, comporte sur le côté inférieur, un équipement de roulement (12) et/ou un équipement de glissement,
et
**en ce que** le poste de poinçonnage comprend en outre au moins un dispositif de poinçonnage (30) destiné au poinçonnage du pare-chocs (1) de véhicule automobile,
le dispositif de poinçonnage (30) comprenant au moins un outil de poinçonnage (400) ainsi qu'au moins une matrice de poinçonnage (500), aussi bien l'outil de poinçonnage (400) que la matrice de poinçonnage (500) étant respectivement fixés à un équipement de réception (600) d'un support (700, 800) mobile, de préférence mobile en rotation, les deux supports (700, 800) comportant respectivement au moins un autre équipement de réception (600) destiné à la fixation d'au moins un autre équipement de traitement (900, 1000, 2000, 3000), de telle sorte que, par un mouvement des deux supports (700, 800), un réglage de la machine de poinçonnage (30) pour une nouvelle étape de traitement conçue différemment peut être réalisée avec les autres équipements de traitement (900, 1000, 2000, 3000) et que les deux supports (700, 800) sont disposés sur un arceau (1600) en forme de C sur lequel l'ensemble du dispositif de poinçonnage (30) est monté.

2. Poste de poinçonnage selon la revendication 1, **caractérisé en ce que** les entraînements linéaires (6) sont réalisés sous la forme de moteurs linéaires, en particulier d'entraînements magnétiques linéaires, et/ou d'actionneurs linéaires et/ou de vérins hydrauliques et/ou de vérins pneumatiques.

3. Poste de poinçonnage selon la revendication 1 ou 2, **caractérisé en ce que** le dispositif de fixation (3) comporte au moins quatre, de préférence au moins six éléments de fixation (5).

4. Poste de poinçonnage selon l'une des revendications 1 à 3, **caractérisé en ce qu'**un élément de fixation (5) comporte respectivement au moins un élément de blocage à vide (10) destiné au blocage local du pare-chocs (1, 1') de véhicule automobile sur l'élément de fixation (5).

5. Procédé de fixation d'un pare-chocs (1, 1') de véhicule automobile en polymère pourvu d'une peinture pendant un processus de poinçonnage, au moyen d'un dispositif de réception (70, 70') qui comporte un dispositif de fixation (3) pour la fixation du pare-chocs (1, 1') de véhicule automobile,
l'équipement de fixation (3) comportant plusieurs éléments de fixation (5) espacés les uns des autres, et
les éléments de fixation (5) étant déplacés par respectivement au moins deux entraînements linéaires (6) permettant un mouvement des éléments de fixation (5) dans au moins deux directions axiales, respectivement par rapport à un socle (2, 2') du dispositif de réception (70, 70') pour, par l'ensemble des mouvements des éléments de fixation (5) par rapport au socle (2, 2'), adapter le dispositif de fixation (3) globalement individuellement au contour de surface du pare-chocs (1, 1') de véhicule automobile concret à fixer.

6. Procédé selon la revendication 5, **caractérisé en ce que** les entraînements linéaires (6) sont commandés par un système numérique de traitement de données.

7. Procédé selon la revendication 6, **caractérisé en ce que** les grandeurs d'entrées utilisées pour la commande des entraînements linéaires (6) sont les données de CAO du pare-chocs (1, 1') de véhicule automobile à fixer.
